# DEMANDE DE BREVET EUROPEEN

(11) **EP 3 451 517 A1**
(43) Date de publication de la demande: **06.03.2019**
(21) Numéro de dépôt: 18189360.3
(22) Date de dépôt: 16.08.2018
(51) Int. Cl.: H02M 1/088, H02M 3/158

(54) **CONVERTISSEUR DE PUISSANCE EN TECHNOLOGIE SEMI-CONDUCTEUR A LARGE BANDE INTERDITE**

(30) Priorité: 18.08.2017 FR 1757752
(71) Demandeur: ALSTOM Transport Technologies, 93400 Saint-Ouen (FR)
(72) Inventeur: CARDARELLI, Felice, 7134 LEVAL-TRAHEGNIES (BE)
(74) Mandataire: Lavoix

(57) **Abrégé**

Ce convertisseur (101) comporte une pluralité de cellules (130₁, ..., 130ₙ) identiques et connectées en parallèles, chaque cellule comportant des premier et second pôles d'entrée (131₁, ..., 131_{N}; 132₁, ..., 132_{N}) connectés à des première et seconde entrées (111, 112) du convertisseur et des premier et second pôles de sortie (141₁, ..., 141_{N}; 142₁, ... . 142_{N}) connectées à des première et seconde sorties (121, 122) du convertisseur, chaque cellule comportant : un condensateur d'entrée (133) connecté entre les pôles d'entrée de la cellule ; une paire d'interrupteurs commandés (135, 136) montés en série l'un de l'autre et comportant au moins un transistor de puissance (153, 151) en technologie semiconducteur à large bande interdite ; un lien électrique à très basse impédance entre le condensateur d'entrée (133) et la paire d'interrupteurs commandés (135, 136) ; et une inductance (137) connectée à un point milieu (138) entre les interrupteurs de la paire d'interrupteurs commandés.

## Description

La présente invention concerne les convertisseurs de puissance.

Les convertisseurs de puissance en technologie semi-conducteur classique, c'est-à-dire en technologie silicium (Si), sont bien connus et largement utilisés, notamment dans le domaine ferroviaire. En particulier, il est connu des convertisseurs à base de transistors IGBT.

On souhaiterait pouvoir passer à des semi-conducteurs à large bande interdite (« wide-bandgap semiconductors » en anglais), comme par exemple le diamant (C), le nitrure de gallium (GaN), le nitrure d'aluminium (AIN) ou le carbure de silicium (SiC).

En effet, alors que les commutations d'un transistor en technologie Si sont relativement lentes, de l'ordre de 400ns, les commutations d'un transistor en technologie GaN par exemple sont extrêmement rapides, de l'ordre de 2ns, et celles d'un transistor SiC sont très rapides, de l'ordre de 40ns.

L'augmentation de la fréquence de découpage du convertisseur permettrait de réduire drastiquement la taille des composants passifs qui sont généralement associés aux transistors IGBT.

La possibilité d'une augmentation de la fréquence de découpage offerte par les semi-conducteurs à large bande interdite permet également de réduire les pertes énergétiques. En conséquence, un convertisseur en technologie GaN par exemple présenterait un échauffement faible comparé à celui d'un convertisseur à semi-conducteur classique.

Il serait donc également possible de réduire drastiquement la taille du système de refroidissement associé au convertisseur.

Les dimensions du convertisseur seraient alors fortement réduites par rapport à l'état de la technique et ceci à puissance égale.

Cependant, l'architecture électrique des convertisseurs connus ne peut être reprise simplement.

En effet, en technologie semi-conducteur à large bande interdite, à cause de la rapidité de la commutation, deux transistors appartenant à des branches différentes du convertisseur et donc montés en parallèle ne peuvent pas être parfaitement synchronisés.

Ainsi, si, dans un transistor à deux branches, un transistor de la seconde branche bascule dans l'état passant avec un retard supérieur à 2ns après qu'un transistor de la première branche a été basculé dans l'état passant, l'intégralité du courant appliqué en entrée du convertisseur va passer par le transistor de la première branche. Cela risque de le détruire. En effet, s'il y a n transistor en parallèle, un transistor du convertisseur n'est dimensionné que pour supporter le passage d'une fraction égale à 1/n du courant total Iₜₒₜ.

En fait, avec des temps de basculement de quelques nanosecondes à quelques dizaine des nanosecondes, il est impossible de garantir la synchronisation des n transistors en parallèle. En effet, même si les signaux de commande de n transistors sont parfaitement synchronisés à la sortie du dispositif de commande du convertisseur, l'inductance de câblage entre le dispositif de commande et la grille de chaque transistor introduit des disparités temporelles.

Ainsi la solution à ce problème ne peut pas venir du dispositif de commande des interrupteurs du convertisseur.

De plus, la dispersion des caractéristiques de fabrication des transistors eux-mêmes introduit un temps de réaction qui n'est pas contrôlable et qui fait perdre toute synchronisation.

L'invention a donc pour but de résoudre ce problème.

Pour cela l'invention a pour objet un convertisseur de puissance en technologie semi-conducteur à large bande interdite, caractérisé en ce qu'il comporte une pluralité de cellules, les cellules étant identiques entre elles, chaque cellule comportant un premier et un second pôles d'entrée respectivement connectés à des première et seconde entrées du convertisseur et un premier et un second pôles de sortie respectivement connectées à des première et seconde sorties du convertisseur, les cellules étant connectées en parallèles les unes des autres, chaque cellule comportant : un condensateur d'entrée connecté entre les premier et second pôles d'entrée de la cellule ; une paire d'interrupteurs commandés montés en série l'un de l'autre ; un lien électrique à très basse impédance entre le condensateur d'entrée et la paire d'interrupteurs commandés ; et une inductance connectée à un point milieu entre les interrupteurs de la paire d'interrupteurs commandés, chaque interrupteur commandé comportant au moins un transistor de puissance en technologie semi-conducteur à large bande interdite.

Suivant des modes particuliers de réalisation, ce convertisseur comporte une ou plusieurs des caractéristiques suivantes, prises isolément ou suivant toutes les combinaisons techniquement possibles :
- le convertisseur est du type « Buck », dans lequel la paire d'interrupteurs est connectée en parallèle du condensateur d'entrée et l'inductance est connectée entre le point milieu et le premier pôle de sortie de la cellule qui est connecté à la première borne de sortie du convertisseur, le second pôle d'entrée et le second pôle de sortie de chaque cellule étant connectés entre eux.
- l'inductance est supérieure à 1µH.
- le semi-conducteur à large bande interdite est du diamant C, du nitrure de gallium GaN, du nitrure d'aluminium AIN ou du carbure de silicium SiC.
- le lien électrique très basse impédance est réalisé par un routage sur substrat céramique, un circuit imprimé ou un busbar.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est un schéma électrique d'un convertisseur de puissance en technologie GaN selon l'invention ; et,
- La figure 2 est un graphe du courant en fonction du temps pour un convertisseur de la figure 2 ayant deux branches.

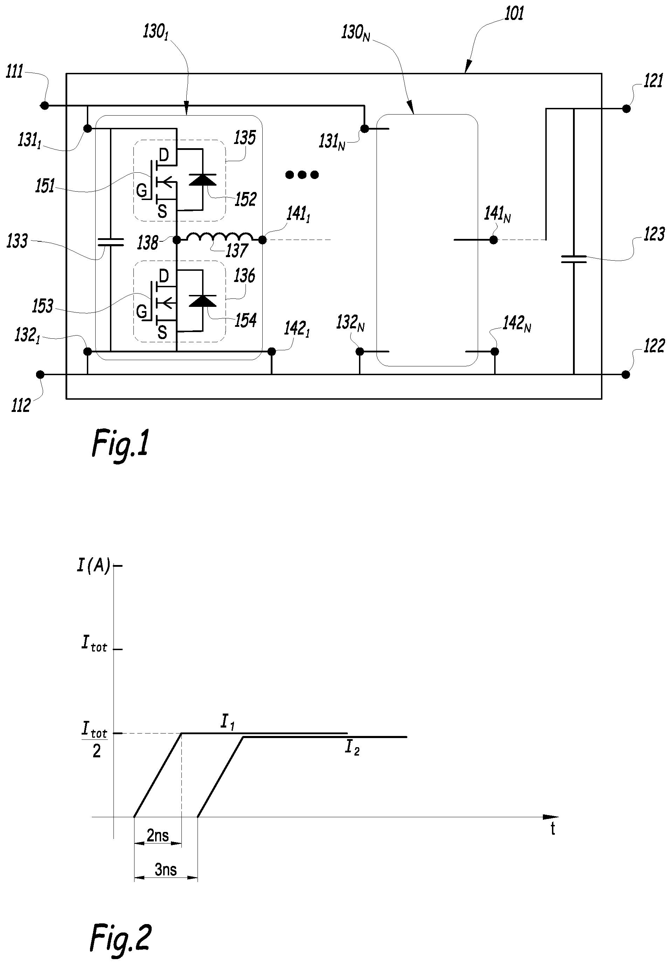

La figure 1 représente un mode de réalisation préféré du convertisseur de puissance selon l'invention.

Le convertisseur 101 est réalisé en technologie GaN. En variante il pourrait être réalisé dans une autre technologie semi-conducteur à large bande interdite (« wide-bandgap semiconductors » en anglais), notamment en technologie SiC.

Le convertisseur 101 est un quadripole comportant une première borne d'entrée 111 et une seconde borne d'entrée 112 et une première borne de sortie 121 et une seconde borne de sortie 122.

Le convertisseur 101 comporte N cellules 130 et un condensateur de sortie 123.

Sur la figure 1 seule la première cellule 130₁ et la dernière cellule130_{N} de la pluralité de cellules sont représentées. Les cellules sont toutes identiques entre elles. Il s'agit de quadripoles montés en parallèle les uns des autres entre, d'une part, entre les deux bornes d'entrée 111, 112 et, d'autre part, les deux bornes de sortie 121, 122 du convertisseur 101.

Par exemple, la cellule 130₁ comporte des premier et second pôles d'entrée 131₁ et 132₁ connectées respectivement à la première borne d'entrée 111 et à la seconde borne d'entrée 112 du convertisseur et une paire de pôles de sorties 141₁ et 142₁ connectées respectivement à la première borne de sortie 121 et à la seconde borne de sortie 122 du convertisseur

Dans le mode de réalisation décrit ici en détail, la cellule 130₁ forme un circuit électrique du type demi-pont, le convertisseur 101 pris en exemple étant du type « Buck ». Ce circuit électrique peut également être appliqué dans tout autre convertisseur connu de l'homme du métier qu'il soit de type « Boost », « Half-Bridge », « Full-Bridge », « Phase inverter », ou autre...

La cellule 130₁ comporte un condensateur d'entrée 133, une paire d'interrupteurs commandés 135 et 136, le tout monté en série dans une maille de très basse impédance, le routage étant réalisé sur substrat céramique, circuit imprimé ou busbar (terme anglais générique pour désigner une connexion à très basse impédance).

La paire d'interrupteurs commandés 135 et 136 montés en série l'un de l'autre est communément appelée « branche ».

Une maille reliant les premier et second pôles d'entrée 131₁ et 132₁ et comportant le condensateur d'entrée 133 est en fait l'alimentation de la branche. La branche est donc montée en parallèle du condensateur d'entrée 133.

Il est important de noter que le lien électrique entre le compensateur d'entrée 133 et chaque interrupteur commandé de la branche présente une très basse impédance.

La cellule 130₁ comporte une inductance 137 connectée entre le point milieu 138 situé entre les interrupteurs commandés 135 et 136 et le premier pôle de sortie 141₁.

Dans le mode de réalisation représenté sur la figure 1, l'interrupteur 135 de la partie supérieure de la branche est constitué d'un transistor 151 et d'une diode 152 supplémentaire montée entre la source S et le drain D du transistor 151. La diode supplémentaire est optionnelle. Elle peut être remplacée par la diode intrinsèque au type de semi-conducteur utilisé ou bien la structure du transistor permet elle-même de conduire le courant dans les deux sens.

Le transistor 151 est un transistor de puissance en technologie GaN. Sur la figure 1, il s'agit de la représentation d'un transistor MOSFET à canal N. En variantes, d'autres structures de transistor sont envisageables : IGBT, FET, HFET, HEMT,...

Le transistor 151 comporte une source S, un drain D et une grille G.

Sur la grille G du transistor est appliqué un signal électrique de commande généré par un dispositif de commande non représenté sur les figures. Le signal de commande permet de basculer le transistor d'un état passant « ON » à un état bloquant « OFF » et inversement. Le dispositif de commande du convertisseur selon l'invention est identique à celui de l'état de la technique.

De manière similaire, l'interrupteur 136 de la partie inférieure de la branche est constitué d'un transistor 153 et d'une diode 154 montée entre la source S et le drain D du transistor 153.

Une description identique pourrait être faite pour chacune des autres cellules du convertisseur 101.

L'homme du métier constatera que, selon l'invention, chaque cellule permet d'associer à une branche d'interrupteurs commandés, un condensateur d'entrée élémentaire et une inductance élémentaire. Au contraire, dans l'état de la technique, ces fonctions sont mises en commun entre les différentes branches d'interrupteurs, qui y accèdent à travers une barre de connexion à très basse impédance (« busbar » en anglais).

Chaque cellule commute à la vitesse de 2ns.

Par exemple, lors du basculement de l'état passant « ON » à l'état bloquant « OFF » de l'interrupteur 136 du bas de la branche d'interrupteurs, le courant passe de 20A à 0A.

Cette variation de courant s'opère à travers le composant qui se coupe, c'est-à-dire l'interrupteur 136, mais également sur l'autre composant (interrupteur 135 dans notre exemple) qui conduit le courant dans la phase de roue libre.

En plaçant le condensateur d'entrée 133 à proximité immédiate de la branche d'interrupteurs 135 et 136 à l'intérieur même de la cellule 130, on diminue les dimensions de la boucle de commutation, qui est donc extrêmement courte. On évite ainsi au maximum les problèmes d'inductance parasite en limitant les surtensions aux bornes du composant 136.

Par ailleurs, le point milieu 138 entre les deux interrupteurs 135 et 136 est considéré comme une source de courant constant à l'échelle de la commutation (2ns) du fait de la présence de l'inductance 137, qui constitue ici une source de courant. L'inductance sert donc à l'équilibrage de la cellule.

En effet, le courant à travers l'inductance 137 répond à la loi de Lenz (U=L.di/dt).

Pour un composant GaN de 650V/60A par exemple, le point milieu 138 passant de 0 à 200V en 2ns, avec une inductance 137 de 1µH, le courant à travers l'inductance 137 ne varie que de 400mA. Par rapport à la variation de courant de 20A en figure 2 à travers les interrupteurs, on peut considérer que le courant à travers l'inductance est constant, puisqu'elle ne varie que de 2%.

L'inductance de sortie 137 requise pour une cellule élémentaire (limitée à 20A thermique) d'un convertisseur de 200V est donc d'au moins de 1µH de manière à ce que le courant qui la traverse à chaque instant ne soit pas sensible à la commutation des interrupteurs (pour un critère de 2%). Pour des cellules élémentaires plus puissantes (60A ou plus) et pour des tensions de convertisseur plus grandes, la valeur de l'inductance minimum requise sera d'une valeur différente, qui dépend également du critère de variation de courant que l'on s'autorise dans l'inductance.

Plus l'inductance sera grande et plus le courant dans l'inductance pourra être considéré comme constant. Voilà pourquoi on propose une valeur minimale de 1µH pour l'inductance 137 mais cela dépend de l'application et du critère de partage de courant que l'on s'autorise.

La valeur de 1µH correspond à l'exemple d'un composant GaN 20A/650V qui commute en 2ns. Pour du diamant, qui commute à des vitesses plus rapides, et en fonction du calibre du courant total, de valeur de l'inductance minimum pourrait être plus petite que 1µH, ce qui contraint encore moins la conception.

Si chaque cellule 130 se partage 20A chacune à 2% près, l'objectif du partage de courant est atteint.

Ainsi, le courant de sortie d'une cellule 130 varie tellement lentement que le partage du courant est garanti entre les différentes cellules, quel que soit le retard de commutation entre ces cellules.

Il est à noter que les convertisseurs de l'état de la technique nécessitent l'utilisation d'une inductance bien supérieure à 1µH à des fins de filtrage ou propre à la topologie de conversion. Ainsi, dans la présente invention, de telles valeurs d'inductance ne constituent pas une limitation technique.

Avantageusement, suivant le type de convertisseur souhaité et les performances souhaitées pour le convertisseur, le convertisseur comprend une inductance de sortie supplémentaire connectée entre le condensateur 123 et chaque premier pôle de sortie 141_{1,...,} 141_{N}. Plus précisément, lorsque la somme des inductances 137 en parallèle ne représente pas la valeur requise par le type du convertisseur, une inductance supplémentaire est intégrée dans le convertisseur comme indiqué ci-dessus.

La figure 2 est un graphe représentant, pour le cas d'un convertisseur comportant N=2 cellules 130, le courant I1 circulant dans l'inductance 137 de la première cellule et le courant I2 circulant dans l'inductance 137 de la seconde cellule, en fonction du temps t.

Bien que le basculement des première et seconde cellules ne soit pas synchronisé, le courant de sortie d'une cellule ne dépasse pas le courant total Iₜₒₜ appliqué en entrée du convertisseur, divisé par deux (c'est-à-dire le nombre N de branches du convertisseur), notamment dans l'inductance de la première cellule qui commute plus tôt que la seconde cellule. Les composants de la première cellule sont donc protégés.

Une fois que les deux cellules sont dans le même état, les courants sont partagés entre les deux inductances.

Ainsi, grâce à l'inductance placée dans chaque cellule, un retard entre les instants de commutation de deux cellules du convertisseur n'a pas d'impact.

En variante, le convertisseur est du type « Boost », du type « Buck-Boost », du type « demi-pont » ou même onduleur triphasé. La cellule élémentaire venant d'être décrite peut être utilisée pour ces différents types de convertisseur. L'homme du métier saura comment connecter les pôles d'entrée et de sortie de chaque cellule aux bornes d'entrée et de sortie du convertisseur à réaliser.

## Revendications

1. Convertisseur de puissance (101) en technologie semi-conducteur à large bande interdite, **caractérisé en ce qu'**il comporte une pluralité de cellules (130_{1,...,} 130ₙ), les cellules étant identiques entre elles, chaque cellule comportant un premier et un second pôles d'entrée (131_{1,...,} 131_{N,;} 132_{1,...,} 132_{N}) respectivement connectés à des première et seconde entrées (111, 112) du convertisseur et un premier et un second pôles de sortie (141_{1,...,} 141_{N;} 142_{1,....} 142_{N}) respectivement connectés à des première et seconde sorties (121, 122) du convertisseur, les cellules étant connectées en parallèles les unes des autres, chaque cellule comportant :
- un condensateur d'entrée (133) connecté entre les premier et second pôles d'entrée de la cellule ;
- une paire d'interrupteurs commandés (135, 136) montés en série l'un de l'autre ;
- un lien électrique à très basse impédance entre le condensateur d'entrée (133) et la paire d'interrupteurs commandés (135, 136) ; et,
- une inductance (137) connectée à un point milieu (138) entre les interrupteurs de la paire d'interrupteurs commandés,
chaque interrupteur commandé comportant au moins un transistor de puissance (153, 151) en technologie semi-conducteur à large bande interdite.

2. Convertisseur de puissance (101) selon la revendication 1, du type « Buck », dans lequel la paire d'interrupteurs (135, 136) est connectée en parallèle du condensateur d'entrée (133) et l'inductance (137) est connectée entre le point milieu (138) et le premier pôle de sortie (141) de la cellule (130) qui est connecté à la première borne de sortie (121) du convertisseur, le second pôle d'entrée et le second pôle de sortie de chaque cellule étant connectés entre eux.

3. Convertisseur de puissance (101) selon la revendication 1 ou la revendication 2, dans lequel l'inductance (137) est supérieure à 1µH.

4. Convertisseur de puissance (101) selon l'une quelconque des revendications précédentes, dans lequel le semi-conducteur à large bande interdite est du diamant, du nitrure de gallium, du nitrure d'aluminium ou du carbure de silicium.

5. Convertisseur de puissance (101) selon l'une quelconque des revendications précédentes, dans lequel le lien électrique très basse impédance est réalisé par un routage sur substrat céramique, un circuit imprimé ou un busbar.
